# EUROPEAN PATENT SPECIFICATION

(11) **EP 4 113 713 B1**
(45) Date of publication and mention of the grant of the patent: **02.12.2026**
(21) Application number: 22181983.2
(22) Date of filing: 29.06.2022
(51) Int. Cl.: H01M 50/171, H01M 50/186, H01M 50/533, H01M 50/548, H01M 50/567, H01M 50/627, H01M 50/167

(54) **SECONDARY BATTERY**
SEKUNDÄRBATTERIE
BATTERIE SECONDAIRE

(30) Priority: 30.06.2021 KR 20210085721
(43) Date of publication of application: 04.01.2023
(73) Proprietor: Samsung SDI Co., Ltd., Yongin-si, Gyeonggi-do 17084 (KR)
(72) Inventor: CHO, Seong Bong, 17084 Yongin-si (KR); YI, Jeong Wook, 17084 Yongin-si (KR)
(74) Representative: Marks & Clerk LLP

(56) References cited:
- WO-A1-2020/056879
- KR-B1- 100 624 909

## Description

### BACKGROUND

### 1. Field

Aspects of embodiments of the present disclosure relate to a secondary battery.

### 2. Description of the Related Art

Unlike primary batteries which are not rechargeable, secondary batteries can be charged and discharged. Low-capacity secondary batteries are widely employed in small-sized portable electronic devices, such as smartphones, feature phones, tablet computers, notebook computers, digital cameras, camcorders, etc., while large-capacity secondary batteries are commonly used for driving motors of hybrid automobiles, electric automobiles, etc.

The secondary battery may include an electrode assembly including positive and negative electrodes, a case or can, that accommodates the electrode assembly, terminals connected to the electrode assembly, and other components. Secondary batteries may be classified into cylindrical, prismatic, and pouch types, according to the shape.

The above information disclosed in this Background section is provided for enhancement of understanding of the background of the invention and, therefore, it may contain information that does not constitute prior art.
WO 2020/056879 A1 relates to a button cell. KR 100 624 909 B1 relates to a can type secondary battery employing an electrode assembly, a metal can and a cap assembly provided with an accommodation part for accommodating an electrode tab.

### SUMMARY

According to an aspect of embodiments of the present disclosure, a secondary battery having increased sealing strength and improved safety is provided.

A secondary battery according to the present disclosure includes: an electrode assembly including a first electrode plate, a second electrode plate, and a separator; a case including a first side having an opening to accommodate the electrode assembly; a cap plate sealing the first side of the case; a first current collector plate arranged between the electrode assembly and the cap plate; a conductive paste electrically connecting the case and the first current collector plate while physically fixing the case and the first current collector plate; a terminal arranged on a second side of the case; and a second current collector plate electrically connecting the second electrode plate and the terminal.

In one or more embodiments, the conductive paste may be located at a region corresponding to a boundary between an inner peripheral surface of the case and an edge of the first current collector plate.

In one or more embodiments, the conductive paste may be located between the cap plate and the first current collector plate.

In one or more embodiments, the cap plate may include a receiving portion providing a space in which the conductive paste is located.

In one or more embodiments, the receiving portion may be formed by bending an edge of the cap plate away from the first current collector plate.

In one or more embodiments, the first current collector plate may include a first region in contact with the first electrode plate, and a second region in contact with the cap plate, and be elastically deformably bent such that the first region has a height difference with respect to the second region.

In one or more embodiments, the cap plate may have an electrolyte injection hole formed therein.

In one or more embodiments, the case includes a bent portion, and the secondary battery further includes a gasket between the bent portion and the cap plate.

At least some of the above and other features of the invention are set out in the claims.

### BRIEF DESCRIPTION OF DRAWINGS

FIG. 1 is a schematic cross-sectional view of a secondary battery according to an embodiment of the present disclosure.
FIG. 2 is an enlarged view of a region "A" in FIG. 1.
FIG. 3 is a perspective view of a first current collector plate of a secondary battery according to an embodiment of the present disclosure.

### DETAILED DESCRIPTION

Herein, some embodiments of the present disclosure will be described in further detail with reference to the accompanying drawings.

Embodiments of the present disclosure are provided to more completely explain the present disclosure, and the following embodiments may be embodied in many different forms and should not be construed as being limited to the embodiments set forth herein. Rather, these example embodiments are provided so that this disclosure will be thorough and complete and will convey the aspects and features of the present disclosure to a person skilled in the art.

In addition, in the accompanying drawings, sizes or thicknesses of various components may be exaggerated for brevity and clarity. Like numbers refer to like elements throughout. As used herein, the term "and/or" includes any and all combinations of one or more of the associated listed items. In addition, it is to be understood that when an element A is referred to as being "connected to" an element B, the element A may be directly connected to the element B or one or more intervening elements C may be present therebetween such that the element A and the element B are indirectly connected to each other.

The terminology used herein is for the purpose of describing particular embodiments and is not intended to be limiting of the disclosure. As used herein, the singular forms are intended to include the plural forms as well, unless the context clearly indicates otherwise. It is to be further understood that the terms "comprise" or "include" and/or "comprising" or "including," when used in this specification, specify the presence of stated features, numbers, steps, operations, elements, and/or components, but do not preclude the presence or addition of one or more other features, numbers, steps, operations, elements, components, and/or groups thereof.

It is to be understood that, although the terms "first," "second," etc. may be used herein to describe various members, elements, regions, layers, and/or sections, these members, elements, regions, layers, and/or sections should not be limited by these terms. These terms are used to distinguish one member, element, region, layer, and/or section from another. Thus, for example, a first member, a first element, a first region, a first layer, and/or a first section discussed below could be termed a second member, a second element, a second region, a second layer, and/or a second section without departing from the teachings of the present disclosure.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the element or feature in the figures is turned over, elements described as "below" or "beneath" other elements or features would then be oriented "on" or "above" the other elements or features. Thus, the exemplary term "below" can encompass both an orientation of above and below.

Unless otherwise defined, all terms (including technical and scientific terms) used herein have the same meaning as commonly understood by one of ordinary skill in the art to which the inventive concept pertains. It is also to be understood that terms defined in commonly used dictionaries should be interpreted as having meanings consistent with the meanings in the context of the related art, and are expressly defined herein unless they are interpreted in an ideal or overly formal sense.

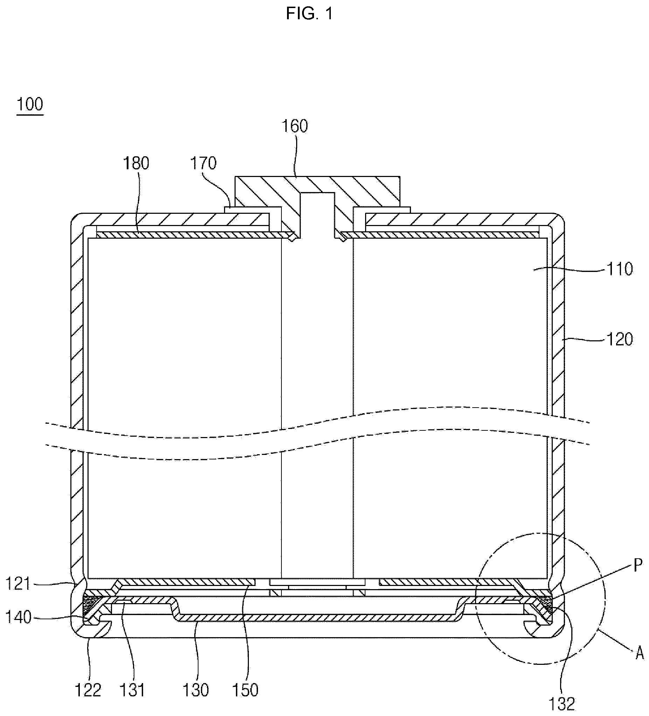

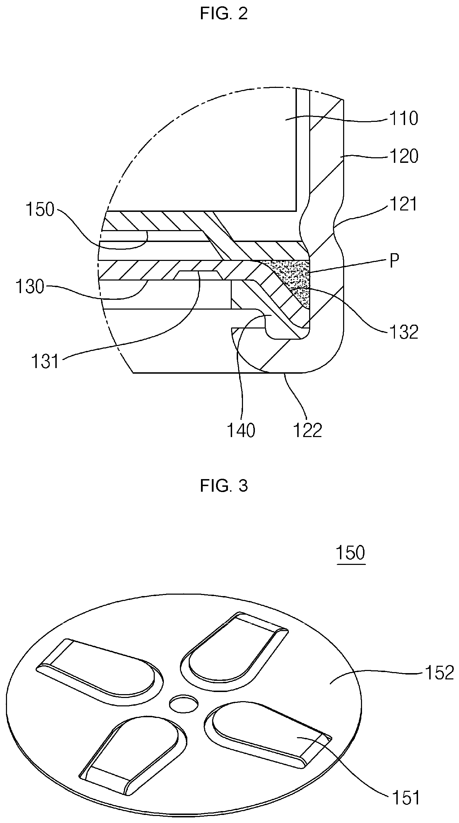

FIG. 1 is a schematic cross-sectional view of a secondary battery according to an embodiment of the present disclosure; FIG. 2 is an enlarged view of a region "A" in FIG. 1; and FIG. 3 is a perspective view of a first current collector plate of a secondary battery according to an embodiment of the present disclosure.

Referring to FIGS. 1 and 2, a secondary battery 100 according to an embodiment of the present disclosure includes an electrode assembly 110, a case or can, 120, a cap plate 130, a first gasket 140, a first current collector plate 150, a terminal 160, a second gasket 170, and a second current collector plate 180.

The electrode assembly 110 includes a first electrode plate, a second electrode plate, and a separator.

The first electrode plate may be any one of a negative electrode plate and a positive electrode plate. When the first electrode plate is a negative electrode plate, the first electrode plate may include, for example, but is not limited to, a negative electrode coating portion in which a negative electrode active material is coated on a negative electrode current collector plate made of a thin conductive metal plate, for example, copper or nickel foil or mesh, and a negative electrode non-coating portion in which a negative electrode active material is not coated. Here, the negative electrode active material may be made of, for example, but is not limited to, a carbon-based material, Si, Sn, tin oxide, a tin alloy composite, a transition metal oxide, lithium metal nitrite, or a metal oxide.

The second electrode plate may be the other one of the negative electrode plate and the positive electrode plate. As described above, when the first electrode plate is a negative electrode plate, the second electrode plate may be a positive electrode plate. In this case, the second electrode plate may include a positive electrode coating portion in which a positive electrode active material is coated on a positive electrode current collector plate made of a thin metal plate having excellent conductivity, for example, aluminium foil or mesh, and a positive electrode non-coating portion in which a positive electrode active material is not coated. Here, the positive electrode active material may be, for example, but is not limited to, a chalcogenide compound, for example, a composite metal oxide, such as LiCoO₂, LiMn₂O₄, LiNiO₂, LiNiMnO₂, or the like.

The separator is interposed between the first electrode plate and the second electrode plate to prevent or substantially prevent a short circuit between the first electrode plate and the second electrode plate. The separator may be made of, for example, but is not limited to, polyethylene, polypropylene, a porous copolymer of polyethylene and polypropylene, and the like.

The electrode assembly 110 may be stacked, for example, in such a manner that the lower end of the first electrode plate protrudes lower than the lower end of the second electrode plate, and the upper end of the second electrode plate protrudes higher than the upper end of the first electrode plate, and thus may be wound in the form of a jelly roll.

In an embodiment, the case 120 is shaped of a cylinder having a surface open to accommodate the electrode assembly 110 and another surface (e.g., an opposite surface) closed. FIG. 1 illustrates that the lower surface is open and the upper surface is closed, but the upper surface may be open and the lower surface may be closed, as desired. However, for purposes of understanding, as shown in the drawing, the following description will be made with respect to a case in which the upper surface is closed and the lower surface is open. In an embodiment, the case 120 may have a protrusion 121 and a bent portion 122 formed at a lower portion thereof. When the first current collector plate 150 is installed, the protrusion 121 slightly protrudes inward from the upper side of the first current collector plate 150 with reference to FIG. 1 to support the first current collector plate 150. In addition, when the cap plate 130 is installed, the bent portion 122 is bent inward from the lower side of the cap plate 130 with reference to FIG. 1, such as by using a crimping process, to cover the edge of the cap plate 130, thereby preventing or substantially preventing the cap plate 130 from being separated.

The cap plate 130 is shaped to correspond to the lower surface of the case 120, for example, in a disk shape, and serves to seal the lower surface of the case 120. In an embodiment, the cap plate 130 has a notch 131 formed in a certain shape (e.g., a predetermined shape) at a certain position (e.g., a predetermined position). The notch 131 serves as a safety vent. Therefore, when gas is generated inside the secondary battery 100 due to an abnormal operation, and the inside pressure exceeds a specific pressure, the cap plate 130 is automatically cut along the notch 131 by the force to quickly release the gas and pressure, thereby preventing or substantially preventing the secondary battery 100 from exploding. In an embodiment, a receiving portion 132, which is locally spaced apart from the first current collector plate 150 to provide a space (e.g., a predetermined space) therebetween, is formed at the edge of the cap plate 130. This space allows for placing a conductive paste P, which will later be described. FIG. 1 illustrates that the cap plate 130 has a substantially plate shape and the receiving portion 132 is formed by bending the edge of the cap plate 130 away from the first current collector plate 150 as a whole, or away from an edge of the first current collector plate 150. In this case, the conductive paste P is positioned in a space defined by an inner peripheral, or circumferential, surface of the case 120, the edge of the cap plate 130, and the edge of the first current collector plate 150.

In an embodiment, the first gasket 140 may be installed between the bent portion 122 of the case 120 and the edge of the cap plate 130, which increases sealing strength.

The first current collector plate 150 is disposed between the electrode assembly 110 and the cap plate 130 inside the case 120, and electrically connects the first electrode plate of the electrode assembly 110 and the cap plate 130 to each other. As described above, when the first electrode plate of the electrode assembly 110 is a negative electrode plate, the first current collector plate 150, the case 120 in contact with the first current collector plate 150, and the cap plate 130 have a negative polarity.

The case 120 and the first current collector plate 150 may be bonded to each other by the conductive paste P. To this end, first, in a state in which the electrode assembly 110 is installed in the case 120, the first current collector plate 150 is disposed under the case 120 so as to allow the first current collector plate 150 to be in contact with the first electrode plate of the electrode assembly 110, and the conductive paste P is applied to a region corresponding to a boundary between the inner peripheral surface of the case 120 and the edge of the first current collector plate 150. Next, the lower surface of the case 120 is closed with the cap plate 130 so as to allow the cap plate 130 to be in contact with the first collector plate 150, and, in an embodiment, the conductive paste P is cured through local thermal compression. Thereafter, the first gasket 140 is disposed at the edge of the cap plate 130, and the lower end of the case 120 is bent inward to fix the cap plate 130.

By using the conductive paste P in this way, in addition to fixing the cap plate 130 by using the bent portion 122, the first current collector plate 150 is fixed by using the conductive paste P, thereby further improving the sealing strength.

The conductive paste P itself may be a material known in the art. In addition, with reference to the present disclosure, a person skilled in the art could electrically connect the case 120 with the first current collector plate 150 while physically fixing the case 120 and the first current collector plate 150 and would be able to appropriately select and use materials that do not have inappropriate physical properties to be applied to a secondary battery, and, thus a detailed description thereof will be omitted.

Although it has been described above that the case 120 and the first current collector plate 150 are bonded to each other by the conductive paste P, the cap plate 130 may also be bonded together by the conductive paste P, as desired. For example, the conductive paste P may be applied to a region corresponding to the boundary between the inner peripheral surface of the case 120 and the edge of the first current collector plate 150 by a relatively smaller volume than the receiving portion 132 of the cap plate 130, thereby bonding the case 120 and the first current collector plate 150 to each other by the conductive paste P. Alternatively, by applying the conductive paste P by a volume that is substantially the same as or slightly larger than the receiving portion 132 of the cap plate 130, the cap plate 130 may also be bonded by the conductive paste P.

In an embodiment, referring to FIG. 3, the first current collector plate 150 may be formed in a disk shape as a whole and may be configured such that a first region 151 is cut to be bent with respect to a second region 152. In an embodiment, the first current collector plate 150, which includes the first region 151 mainly in contact with the first electrode plate of the electrode assembly 110 and the second region 152 mainly in contact with the cap plate 130, may be constructed so as to be elastically deformably bent to allow the first region 151 to have a height difference (e.g., a vertical offset) with respect to the second region 152. Accordingly, even if tolerances occur in the electrode assembly 110, the case 120, the cap plate 130, the first current collector plate 150, etc. during manufacturing, assembling may be carried out, such that the first region 151 comes into close contact with the first electrode plate of the electrode assembly 110 and the second region 152 comes into close contact with the cap plate 130, through the flexible first current collector plate 150.

In an embodiment, the cap plate 130 may or may not have an electrolyte injection hole formed therein. FIG. 1 illustrates that the electrolyte injection hole is not formed. If the electrolyte injection hole is formed, as described above, the process may be carried out such that, after the first collector plate 150 is disposed to apply the conductive paste P, the lower surface of the case 120 is closed with the cap plate 130 to cure the conductive paste P, and the cap plate 130 is then fixed by using a crimping process, for example, the electrolyte may be injected through an electrolyte injection hole, followed by sealing. If the electrolyte injection hole is not formed, the process may be carried out such that the electrolyte solution may be injected through the lower surface of the case 120 before closing the lower surface of the case 120 with the cap plate 130.

The terminal 160 is installed on the upper surface of the case 120. FIG. 1 illustrates that, in an embodiment, the terminal 160 is installed in a rivet manner. That is, a hole is formed in the upper surface of the case 120, such that the terminal 160 is disposed through the hole and is fixed by supporting an upper end thereof at an upper side of the case 120, and supporting a lower end thereof at a lower side of the second current collecting plate 180. In an embodiment, the second gasket 170 is installed between the case 120 and the terminal 160 to insulate the case 120 and the terminal 160 from each other. Therefore, in an embodiment, the terminal 160 has a positive polarity. However, configuring the positive electrode terminal in this way is merely an example, and the protection scope of the present disclosure is not limited thereto. For example, a person skilled in the art will easily understand that the positive electrode terminal can be configured in a different manner with reference to conventional cylindrical secondary batteries.

As described above, according to an aspect of one or more embodiments of the present disclosure, the sealing strength can be increased by electrically connecting the case and the first current collector plate by using a conductive paste while physically fixing the case and the first current collector plate.

In addition, since welding is not used to connect the case and the first current collector plate, the possibility of generating spatters during welding and the possibility of lowering safety due to the spatters, may be eliminated.

While some example embodiments for carrying out the secondary battery according to the present disclosure have been described herein, the present disclosure is not limited to the example embodiments, and it will be understood by a person skilled in the art that various changes in form and details may be made therein without departing from the scope of the present disclosure as set forth by the following claims.

## Claims

1. A secondary battery (100) comprising:
an electrode assembly (110) comprising a first electrode plate, a second electrode plate, and a separator;
a case (120) comprising a first side having an opening to accommodate the electrode assembly (110);
a cap plate (130) sealing the first side of the case (120);
a first current collector plate (150) arranged between the electrode assembly (110) and the cap plate (130);
a conductive paste (P) electrically connecting the case (120) and the first current collector plate (150) while physically fixing the case (120) and the first current collector plate (150);
a terminal (160) arranged on a second side of the case (120); and
a second current collector plate (180) electrically connecting the second electrode plate and the terminal (160).

2. The secondary battery (100) of claim 1, wherein the conductive paste (P) is located at a region corresponding to a boundary between an inner peripheral surface of the case (120) and an edge of the first current collector plate (150).

3. The secondary battery (100) of claim 1 or claim 2, wherein the conductive paste (P) is located between the cap plate (130) and the first current collector plate (150).

4. The secondary battery (100) of any one of claims 1 to 3, wherein the cap plate (130) comprises a receiving portion (132) providing a space in which the conductive paste (P) is located.

5. The secondary battery (100) of claim 4, wherein the receiving portion (132) is formed by bending an edge of the cap plate (130) away from the first current collector plate (150).

6. The secondary battery (100) of any one of claims 1 to 5, wherein the first current collector plate (150) comprises a first region (151) in contact with the first electrode plate, and a second region (152) in contact with the cap plate (130), and is elastically deformably bent such that the first region (151) has a height difference with respect to the second region (152).

7. The secondary battery (100) of any one of claims 1 to 6, wherein the cap plate (130) has an electrolyte injection hole formed therein.

8. The secondary battery (100) of any one of claims 1 to 7, wherein the case (120) comprises a bent portion (122), and the secondary battery (100) further comprises a gasket (140) between the bent portion (122) and the cap plate (130).

## Patentansprüche

1. Sekundärbatterie (100), umfassend:
eine Elektrodenanordnung (110), die eine erste Elektrodenplatte, eine zweite Elektrodenplatte und einen Separator umfasst;
ein Gehäuse (120), das eine erste Seite aufweist, die eine Öffnung aufweist, um die Elektrodenanordnung (110) aufzunehmen;
eine Abdeckplatte (130), die die erste Seite des Gehäuses (120) abdichtet;
eine erste Stromkollektorplatte (150), die zwischen der Elektrodenanordnung (110) und der Abdeckplatte (130) angeordnet ist;
eine leitfähige Paste (P), die das Gehäuse (120) und die erste Stromkollektorplatte (150) elektrisch verbindet, während sie gleichzeitig das Gehäuse (120) und die erste Stromkollektorplatte (150) physisch fixiert;
einen Anschluss (160), der auf einer zweiten Seite des Gehäuses (120) angeordnet ist; und
eine zweite Stromkollektorplatte (180), die die zweite Elektrodenplatte und den Anschluss (160) elektrisch verbindet.

2. Sekundärbatterie (100) nach Anspruch 1, wobei sich die leitfähige Paste (P) in einem Bereich befindet, der einer Grenze zwischen einer Innenumfangsfläche des Gehäuses (120) und einer Kante der ersten Stromkollektorplatte (150) entspricht.

3. Sekundärbatterie (100) nach Anspruch 1 oder Anspruch 2, wobei sich die leitfähige Paste (P) zwischen der Abdeckplatte (130) und der ersten Stromkollektorplatte (150) befindet.

4. Sekundärbatterie (100) nach einem der Ansprüche 1 bis 3, wobei die Abdeckplatte (130) einen Aufnahmeabschnitt (132) umfasst, der einen Raum bereitstellt, in dem sich die leitfähige Paste (P) befindet.

5. Sekundärbatterie (100) nach Anspruch 4, wobei der Aufnahmeabschnitt (132) durch Biegen einer Kante der Abdeckplatte (130) weg von der ersten Stromkollektorplatte (150) gebildet wird.

6. Sekundärbatterie (100) nach einem der Ansprüche 1 bis 5, wobei die erste Stromkollektorplatte (150) einen ersten Bereich (151), der mit der ersten Elektrodenplatte in Kontakt steht, und einen zweiten Bereich (152), der mit der Abdeckplatte (130) in Kontakt steht, umfasst und elastisch verformbar gebogen ist, sodass der erste Bereich (151) einen Höhenunterschied zum zweiten Bereich (152) aufweist.

7. Sekundärbatterie (100) nach einem der Ansprüche 1 bis 6, wobei die Abdeckplatte (130) eine Elektrolyteinspritzöffnung darin gebildet aufweist.

8. Sekundärbatterie (100) nach einem der Ansprüche 1 bis 7, wobei das Gehäuse (120) einen gebogenen Abschnitt (122) umfasst und die Sekundärbatterie (100) ferner eine Dichtung (140) zwischen dem gebogenen Abschnitt (122) und der Abdeckplatte (130) umfasst.

## Revendications

1. Batterie secondaire (100) comprenant :
un ensemble d'électrode (110) comprenant une première plaque d'électrode, une seconde plaque d'électrode et un séparateur ;
un boîtier (120) comprenant un premier côté présentant une ouverture pour loger l'ensemble d'électrode (110) ;
une plaque de couvercle (130) scellant le premier côté du boîtier (120) ;
une première plaque de collecteur de courant (150) agencée entre l'ensemble d'électrode (110) et la plaque de couvercle (130) ;
une pâte conductrice (P) connectant électriquement le boîtier (120) et la première plaque de collecteur de courant (150) tout en fixant physiquement le boîtier (120) et la première plaque de collecteur de courant (150) ;
une borne (160) agencée sur un second côté du boîtier (120) ; et
une seconde plaque de collecteur de courant (180) connectant électriquement la seconde plaque d'électrode et la borne (160).

2. Batterie secondaire (100) selon la revendication 1, dans laquelle la pâte conductrice (P) est située au niveau d'une région correspondant à une limite entre une surface périphérique intérieure du boîtier (120) et un bord de la première plaque de collecteur de courant (150).

3. Batterie secondaire (100) selon la revendication 1 ou la revendication 2, dans laquelle la pâte conductrice (P) est située entre la plaque de couvercle (130) et la première plaque de collecteur de courant (150).

4. Batterie secondaire (100) selon l'une quelconque des revendications 1 à 3, dans laquelle la plaque de couvercle (130) comprend une portion réceptrice (132) fournissant un espace dans lequel la pâte conductrice (P) est située.

5. Batterie secondaire (100) selon la revendication 4, dans laquelle la portion réceptrice (132) est formée en pliant un bord de la plaque de couvercle (130) à l'écart de la première plaque de collecteur de courant (150).

6. Batterie secondaire (100) selon l'une quelconque des revendications 1 à 5, dans laquelle la première plaque de collecteur de courant (150) comprend une première région (151) en contact avec la première plaque d'électrode et une seconde région (152) en contact avec la plaque de couvercle (130), et est pliée de manière déformable élastique de sorte que la première région (151) présente une différence de hauteur par rapport à la seconde région (152).

7. Batterie secondaire (100) selon l'une quelconque des revendications 1 à 6, dans laquelle la plaque de couvercle (130) présente un trou d'injection d'électrolyte formé en son sein.

8. Batterie secondaire (100) selon l'une quelconque des revendications 1 à 7, dans laquelle le boîtier (120) comprend une portion pliée (122), et la batterie secondaire (100) comprend en outre un joint (140) entre la portion pliée (122) et la plaque de couvercle (130).
